Europäisches Patentamt

European Patent Office

Office européen des brevets

(11) Publication number: **0 206 683**
A2

## EUROPEAN PATENT APPLICATION

(21) Application number: **86304556.3**

(51) Int. Cl.⁴: **F 02 C 7/18, F 01 D 5/08**

(22) Date of filing: **13.06.86**

(30) Priority: **17.06.85 US 745964**

(43) Date of publication of application: **30.12.86**
**Bulletin 86/52**

(84) Designated Contracting States: **DE FR GB IT SE**

(71) Applicant: **UNIVERSITY OF DAYTON, 300 College Park, Dayton, Ohio 45469 (US)**

(72) Inventor: **Minardi, John E., 4163 Braewick Circle Dayton, Ohio 45440 (US)**
Inventor: **von Ohain, Hans P., 5598 Folkstone Drive Dayton, Ohio 45459 (US)**
Inventor: **Lawson, Maurice O., 7006 Cedar Pines Court Dayton, Ohio 45459 (US)**

(74) Representative: **Warren, Anthony Robert et al, BARON & WARREN 18 South End Kensington, London W8 5BU (GB)**

(54) Internal bypass gas turbine engines with blade cooling.

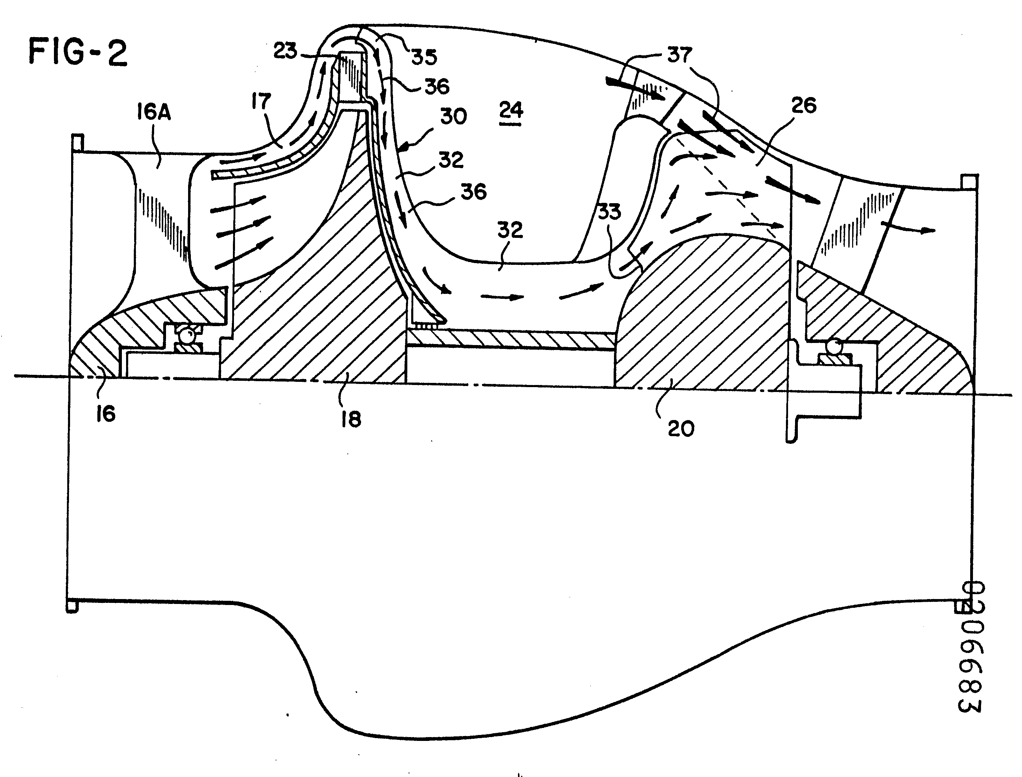

(57) In relation to Fig. 2 of the drawing, a gas turbine with a compressor (18) and a turbine (20), bypasses a portion of the cool air from the compressor (18) into the turbine (20) through a conduit (30, 32), which conduit delivers the cool air to the inlet (33) of the turbine blades (26) so that the cool air (36) flows along the suction side of the turbine blades and maintains a stable flow condition with respect to the hot gases (37) along the pressure side of the turbine blades, with the result that the turbine blades are cooled by the cool air through the conduit (30).

## INTERNAL BYPASS GAS TURBINE
## ENGINES WITH BLADE COOLING

One of the most critical problems in small gas turbines, such as for missiles, trainers, small military or business aircraft, general surface transportation and ground power, is the difficulty associated with achieving strong and efficient turbine blade cooling with reliable, simple and inexpensive turbine blade structures. In such gas turbines, the turbine blades are usually too small to employ the turbine blade cooling techniques as used for large gas turbines.

The growing need for effective blade cooling techniques in small gas turbines is a direct consequence of the continuous quest for greater fuel economy. Greater fuel economy necessitates higher compressor pressure ratios and correspondingly higher isentropic compressor exit temperature ($T_{c,e,s}$). In turn, the turbine inlet temperature (TIT) must be raised, since the thermal eficiency of the Brayton cycle, with non-ideal components, begins to drop rapidly when the ratio of $TIT/T_{c,e,s}$ decreases below 2. For example, for a compressor pressure ratio of about 30:1, $T_{c,e,s}/T_{amb} = 2.64$: thus $TIT/T_{amb} = 5.28$, and TIT = 2750°R at an ambient temperatue ($T_{amb}$) of 520°R.

Current attempts to make ultrahigh, turbine-inlet gas temperatures possible are based on the use of turbine materials having ultrahigh temperature and stress capabilities such as advanced ceramics or advanced composite materials, or the use of oxidization resistant coatings for exotic turbine-blade materials such as Columbium and others. Solving the high-temperature problems by the use of uncooled, novel materials entails many risks and uncertainties with respect to development time, cost and ultimate reliability.

The present invention is directed to a novel method and apparatus by means of which turbine blades in gas turbines are cooled by internal bypass air. Embodiments are disclosed of monorotor and radial-axial (radiax) designs, incorporating the teachings of this invention.

In all of the embodiments, the cooling air passes within the engine from the compression section to the turbine section, and is admitted to the turbine, in relation to the configuration of the blades, at an upstream position. The cooling air remains separated from the combustion gases, which gases flow along essentially separate pathways in a relatively stable condition so that there is a minimum intermixing of the hot gases at the turbine blades with the cooling air, and a minimum of lost efficiency. For this purpose, means defining passageways are formed between the compressor and turbine sections, which permits a portion of the air from the compressor or the fan to bypass the combustion section of the engine. This relatively cold air becomes available in the turbine section for cooling of the turbine blades.

A principal object and advantage of the method and apparatus of this invention is that the simplest possible turbine blade construction is permitted, eliminating the need for hollow or internally cooled blades, thus providing for a high efficiency small size turbine.

A further object and advantage of the invention is the provision of a method and apparatus by means of which highly effective cooling of the turbine blades can be obtained with the smallest penalty in efficiency. A miminum loss of efficiency and loss of cooling is maintained by reason of the fact that the respective hot and cold gases form into separate flow layers which are essentially stable flow sheets, in which the hot gases maintain their integrity of flow on the pressure side of the turbine blades while the cold air forms its flow sheet on the suction side. The interface between the respective layers is "Taylor-stable" by reason of the curvature of the flow passage and further by reason of the fact that the total pressure of the hot gases is considerably greater than the total pressure of the cold gases.

The present invention provides intense cooling of the turbine blades, and it is predicted and estimated that the actual blade temperature will be only slightly greater than the arithmetic mean of the temperatures of the hot and cold flow layers.

Accordingly, a dual stream blade cooling method is achieved which permits utilization of solid blades, which are cooled on one blade side with intense cooling from the leading edge to the trailing edge, and with small performance penalty as compared to uncooled blades. The invention permits the exploitation of the inherent advantages of using solid blades, with the corresponding structural simplicity and lower manufacturing cost, providing gas turbines which are particularly suitable for small size high performance applications. For example, such applications include low power output gas turbine engines which cannot otherwise employ conventional turbine blade cooling by reason of the small physical dimensions of the blades. Low aspect ratios of solid turbine blades provide rugged and yet simple and relatively inexpensive turbine rotor structures which may lend themselves to die-casting manufacturing processes. Further, such low aspect ratio turbine vanes and rotor structure may permit the use of brittle high temperature turbine materials, such as ceramics or composite materials and may permit the use of a layer of thermal barrier material attached to the pressure side of the blades exposed to the hot gas stream.

Accordingly, the favorable performance characteristics of turbines made according to the present invention permit the broadening of application of small gas turbines in areas where their use has not heretofore been economical, such as for small business and military aircraft, unmanned aircraft and drones, surface transportation, and ground power applications. Such small turbine engines, not now presently available at reasonable cost, are particularly suitable for low level subsonic flight missions at short to medium flight ranges. The use of highly strategic or high-cost materials is reduced or avoided.

According to one aspect of the invention, a gas turbine has a compressor section, a combustion section and a turbine section, in which a portion of the cool air is bypassed from the compessor section, characterized by a conduit for delivering bypassed cool air to the inlet region of the turbine section and the turbine blades for applying cool air to the suction side of the turbine blades while maintaining stable flow conduits and maintaining a stable interface between the cool air and the hot gases from the combustion section, which results in the turbine blades being cooled. A further aspect of the invention includes a method for operating a gas turbine in which a quantity of cold air is bled from the inlet region and is directed to the root ends of the turbine blades while hot combustion gases are applied to a radially outer portion of the turbine blades in such a manner that the respective cool and hot gas flows have a minimum of intermixing and that the cool gas flow follows closely the suction side of the turbine blades.

In order that the invention may be more readily understood, reference will now be made to the accompanying drawings, in which:

Fig. 1 is a schematic view of a mixing fan engine having an air-cooled radiax turbine in accordance with this invention;

Fig. 2 is an enlarged schematic view of an internal bypass engine similar to the engine of Fig. 1 using a radial flow compressor;

Fig. 3 is an enlarged fragmentary sectional view of a portion of the turbine section of the engine of Fig. 1;

Fig. 4 is a fragmentary section taken generally along the line 4--4 of Fig. 3;

Fig. 5 is a fragmentary section of the turbine blades, showing the airflow routes thereover, taken generally the line 5--5 of Fig. 3;

Fig. 6 is a schematic sectional view of an internal bypass radiax turbine engine employing an axial flow compressor;

Fig. 7 is a diagram showing the compressor blade element and bypass configuration of the engine of Fig. 6;

Fig. 8 is a partially schematic sectional view of a mixing fan engine employing a monorotor having internal bypass; and

Fig. 9 is a schematic sectional view of a simple monorotor engine; and

Fig. 10 is an enlarged schematic view of the monorotor bypass region.

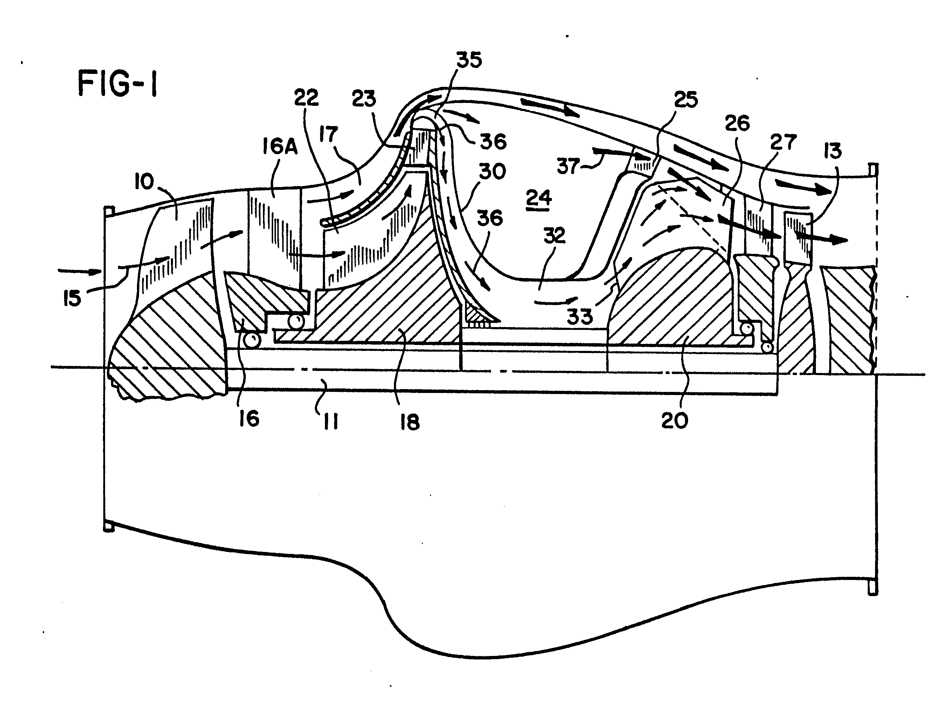

Referring first to Fig. 1, an air cooled radiax turbine is shown, embodied in a mixing fan engine employing both external bypass, and an internal bypass arrangement constructed according to the teachings of this invention. A high pressure ratio inductor fan 10 at the inlet is mounted on a shaft 11 in common with a fan turbine 13 at the outlet. The fan 10 induces airflow along the paths of the arrows 15 into the engine and through the fixed vanes 16a of a stator bearing holder 16.

A portion of the air from the inductor fan 10 is bypassed externally of the engine through a conventional external bypass passageway 17 and exits at the back of the engine, again in a conventional manner.

High pressure ratio radial outflow compressor sections 18 of the engines of both Figs. 1 and 2 are driven by a radiax turbine 20. The turbine 20 includes radial outflow backward bent compressor blades 22, discharging through a diffuser 23 into a combustion chamber 24. The nozzles in the combustion chamber are not shown. Hot gases exit from the combustion chamber 24 through an inlet stator 25 for the high pressure radiax turbine 20. The blades 26 of the turbine 20 receive the high pressure flow from the turbine inlet stator 25, with the exit flow through a bearing holder and stator 27 to the fan turbine 13 (Fig. 1).

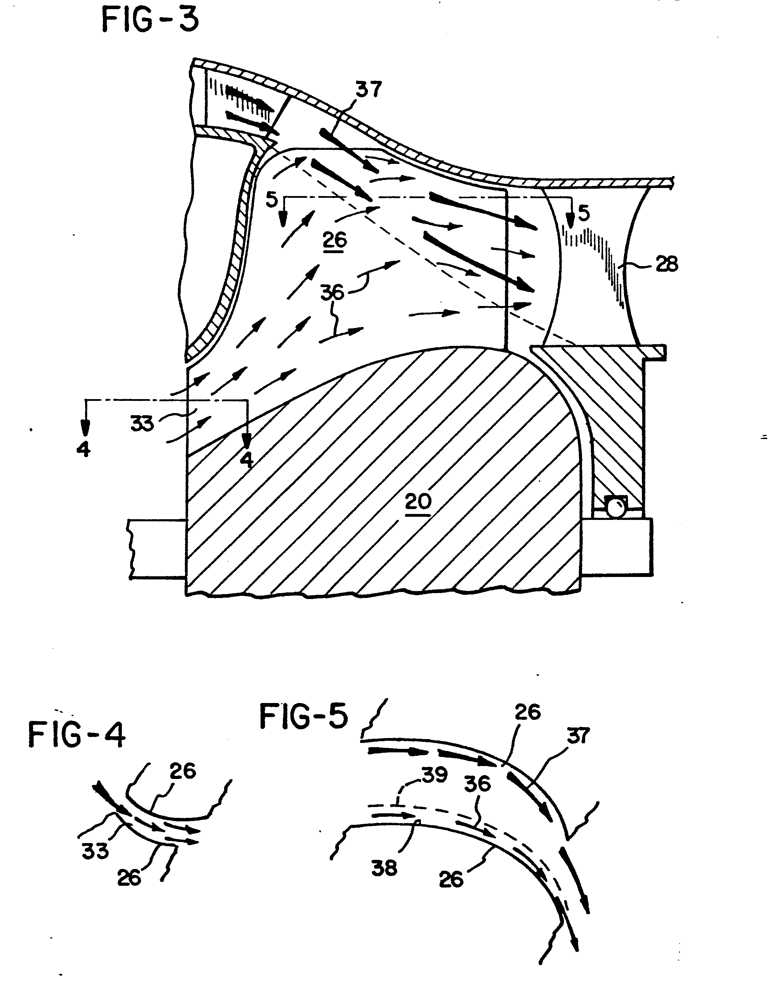

Conduit means for applying or conveying a portion of bypassed air internally from ahead of the radial compressor to the turbine blades is illustrated generally at 30 in Figs 1 and 2. The reference numeral 30 designates one of two or more peripherally or arcuately spaced discrete conduits. Each conduit forms a radially inwardly then generally axially extending passageway 32 which leads from an inlet region adjacent the diffuser 23 to the inlet region 33 of the turbine blades 26. The conduits 30 are formed with inlet discrete openings 35 in the bypass passageway 17 and receive a relatively small portion of the total air. The cooling air conveyed by the conduit means 30 is represented by the relatively smaller arrows 36 in Figs. 2 and 3, as compared to the larger arrows 37 representing the flow of heated air from the combustion chamber 24.

As perhaps is best shown in Fig. 3, the conduit means 30 applies the relatively cold low energy air to the inlet regions 33 of the turbine blades 26, which air tends to flow closely along and against the suction sides 38 of the blades, as illustrated in Fig. 5. An interface 39 is maintained between the flows represented by the high energy gases from the combustion chamber 24 represented by the heavy arrows 37, and the relatively low temperature flow represented by the small arrows 36. The interface 39 between the two respective layers is "Taylor-stable" because of the curvature of the flow passage between the blades, and because of the fact that the total pressure of the hot gases is considerably greater than the total pressure of the cold airflow. In other words, the hot gases directed to the pressure side of the turbine blades from the combustion chamber 24, through the stator vanes 25, forms a stable flow sheet on the pressure side of the vanes while the cold airflow forms a flow sheet on the suction side of the turbine blade passageways.

The hot gases enter the turbine blades 26 at a radially outer region, as illustrated by the arrows 37 in Fig. 3, with a strong axial component. The entrance section 33 where the cold gases enter the turbine wheel, acts like a compressor inlet, and somewhat compresses the cold gases which enter the turbine section. The flows stay generally separate and co-exist in the turbine, as shown in Fig. 5, with the hot gases going to the pressure side of the blade, conventionally, and the cold gas flow going to the suction side, to produce a strong cooling effect to the individual blades from the hub to the blade tips, with minimal reduction to turbine efficiency.

In spite of the fact that Taylor-Görtler vortices will be formed in each of the respective flow interfaces, and in spite of the relatively different flow vectors and velocities therebetween, the interface remains substantially stable even though some intermixng between the hot gas and the cold air is inevitable. It is believed that overall turbine performance is not adversely affected by such mixing, as compared to the substantial gain in engine performance by reason of the intense cooling of the individual turbine blades.

The blades 26 may be solid, since the need for internal cooling is eliminated. This therefore permits the exploitation of the inherent advantages of solid air-cooled blades, namely, structural simplicity, relatively low manufacturing cost, high stability and strength, all of which are particularly suitable for small size, high performance gas turbines.

The number of individual cold air conduit means defining the discrete passageways 32 is a matter of design choice. For symmetry, as few as two may be used at 180° from each other, with the upper limit being a practical one, taking into consideration the physical dimension of the conduit 30 as required to move the requisite amount of bypass air, which air seldom will exceed more than approximately 15 per cent of the total air flow.

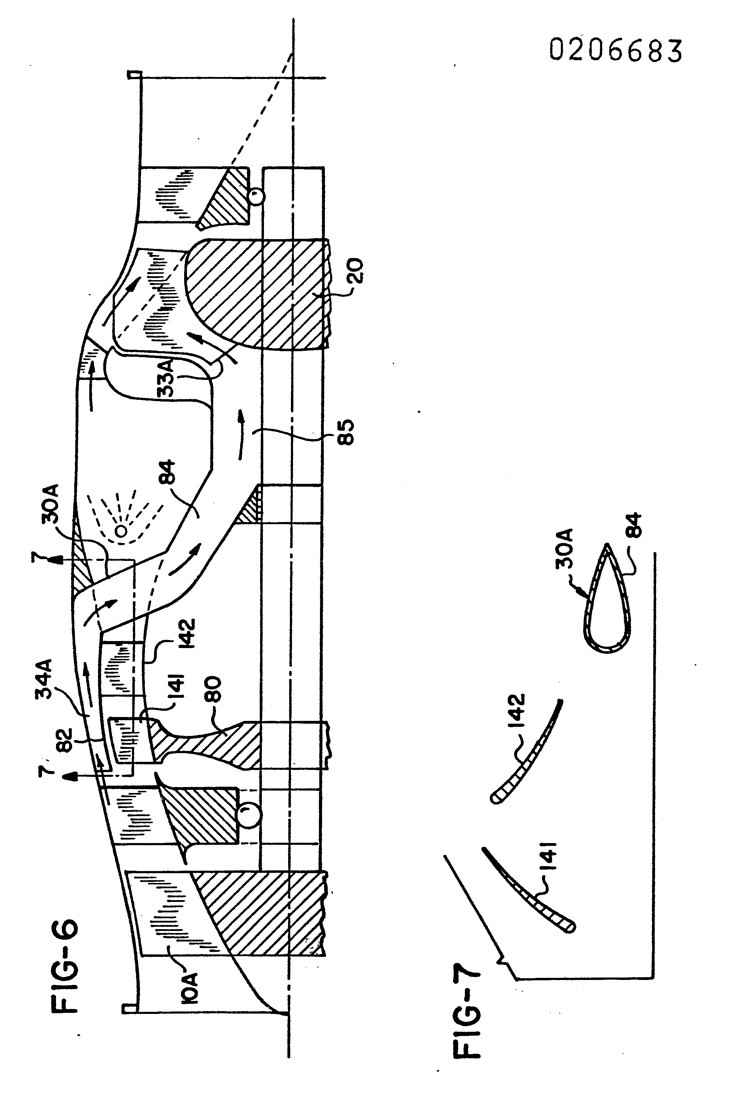

A schematic view of an internal bypass radiax engine using an axial flow compressor is illustrated in Fig. 6 in which like parts have been given like reference numerals with the suffix "a". The embodiment of the invention is applied to an axial flow compressor and shows the manner in which passageway 30a opens at a region 34a radially outwardly of the blade shroud of a conventinal axial compressor 80 to receive the bypass air from the inductor fan 10a. The conduit means 30a, as shown in Fig. 7, may take the form of a pluralty of thin hollow airfoil shaped bypass struts 84 leading to a common plenum region 85 for application to the inlet section 33a of the turbine 20a as in the embodiment of Figs. 1-5.

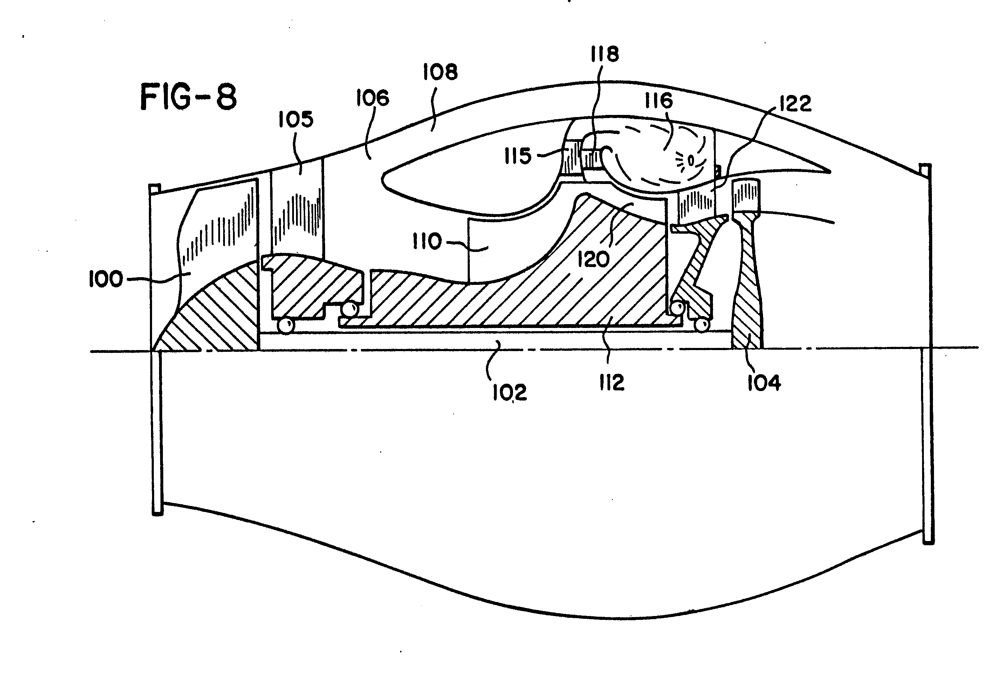

The principles of the present invention may be advantageously applied to a monorotor turbine engines, as shown in Figs. 8, 9 and 10. Like reference numerals are used for like parts. Fig. 8 is a schematic view of a mixing fan engine with internal bypass and a monorotor core. The inductor fan is shown at 100 mounted on a shaft 102 in common with an exit fan turbine 104. The fan 100 delivers air through a stator and bearing holder 105 to an internal region 106 at which point a portion of the air from the fan 100 is bypassed through an annular external conduit or passage 108, and the remaining portion is applied to the inlet of the generally radial compressor blade section 110 of a monorotor 112. The inlet blade section 110 compresses the air in a conventional manner through a diffuser 115 and into a combustion chamber 116. Hot accelerated gases are delivered by the chamber 116 through turbine inlet stator vanes 118 to the turbine blade section 120 also carried on the core or rotor 112. The gases exit through a bearing holder and stator 122 for the turbine fan section 104.

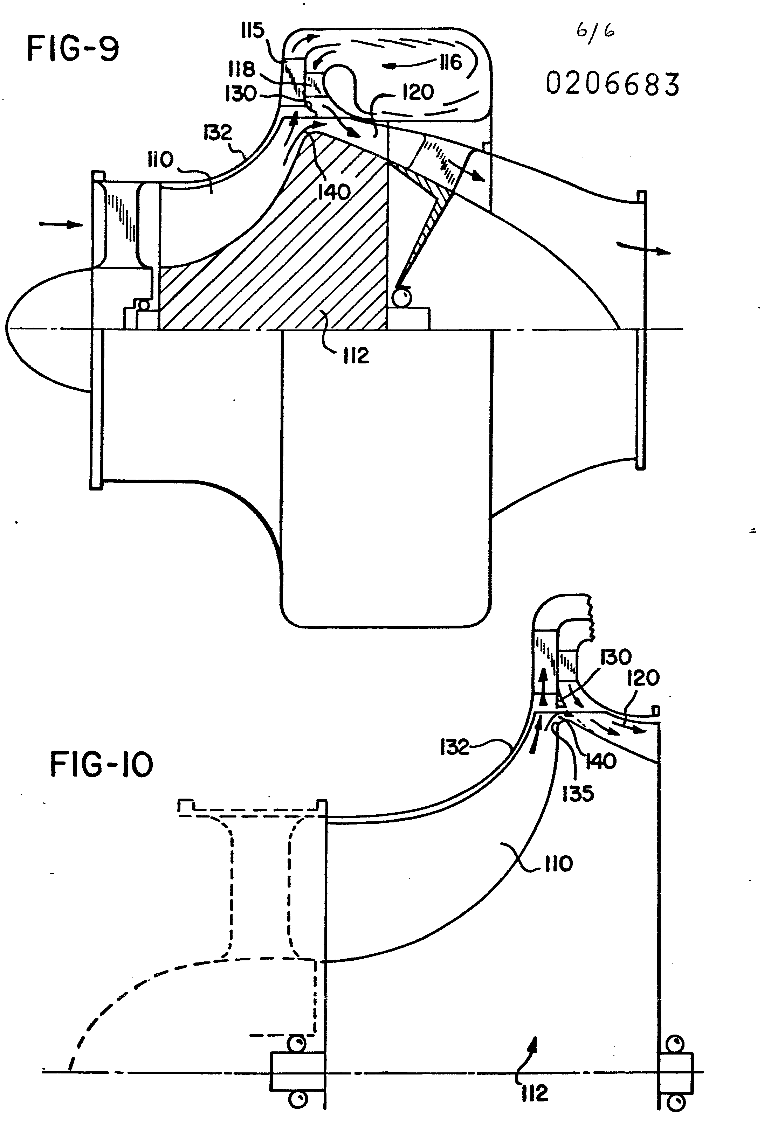

Fig. 9 is a simple monorotor engine suitable for inexpensive lower performance applications. The air is immediately compressed by the monorotor compression section 110 and exits through a diffuser 115 into combustion chamber 116. Hot accelerated gases are delivered by the chamber 116 through turbine inlet stator 118 to the monorotor turbine blade section 120. The gases exit the engine after leaving the blade section 120 and produce the engine thrust.

Referring to Fig. 10, in which the details of the internal bypass monorotor are shown in somewhat greater detail, it will be seen that if the center body of the core 112 were extended radially at the top of the rotor to the wall 130 of the surrounding case 132, it would in effect split the rotor into two component parts. An upstream part including the blades of the compressor section 110 would be essentially a standard radial flow compressor, and a downstream part including the blades of the turbine section 120, which would essentially be a standard radial inflow turbine or a diagonal turbine. However, it will be seen that the rotor body 112 does not extend all the way to the wall 130 of the case 132. Rather, it terminates at a radially outer region 135 somewhat inwardly of the wall 130 of the case 132 to define an axial bypass passageway 140 between the compressor blades 110 and the turbine blades 120. The bypass passageway 140 permits a small amount of the compressed cold air from the compressor section 110 to be admitted into the turbine section. This cold and compressed air is then available in the turbine section for the cooling of the turbine blades. As can be seen in Figs. 8-10, this concept results in compact simple and small engine designs.

The major flow path characteristics can be described as follows: Air in the compressor section is handled as in a standard radial outflow or modern ultrahigh performance compressor up to the compressor rotor exit, leading to the diffuser 115 and the combustion chamber 116.

The compressor diffuser 115, the turbine nozzle 118, and the gas passage design 140, are preferably tailored in such a manner that the static pressure at the turbine rotor entrance region is equal to the static pressure of air leaving the compressor rotor. Accordingly, the cold air and the hot turbine gas form, in each turbine blade passage, two separate airflows. The hot gas forms a stable flow sheet on the pressure side of the blade, while the cold air forms a flow sheet on the suction side of the turbine blade passages. Again, the interface between these two layers is Taylor-stable because of the curvature of the flow passage and the fact that the total pressure of the hot gas is considerably greater than the total pressure of the cold air (both observed from the coordinate system of the turbine blade passage). In spite of the stability of the interface, again some mixing between the layers would be inevitable, but would not be expected adversely to affect turbine performance.

The cooling which results to the turbine blades is intense, and estimates of blade temperature indicate that the temperature is only slightly greater than the arithmetic mean of the temperatures of the hot and cold layers.

While the proposed bypass cooling method and apparatus, as disclosed herein may require a substantially greater amount of cooling air than that required for conventional hollow blade turbines, the energy losses in the cooling air are substantially smaller than in conventional blade cooling configurations. At the highest operational rotor speed, the required cooling air may be as high as about 15 percent of the total compressor airflow, in the case of the monorotor embodiments of Figs. 8-10.

To achieve the highest performance with radial flow compressors, it is necessary to employ backward bent blades, which reduces the Mach number and kinetic energy at the diffuser entrance, and which furnishes a favorable margin between the surge line and best compressor efficiency.

The efficiency as well as the efficacy of the method and apparatus resides in the fact that the cold and hot flows can coexist in a common passageway while rotating at high speed and moving axially at different rotational velocities, although this condition is more critical for the monorotor design than for the radiax designs in view of the presence of the common passageway 140 leading to the turbine blade section 122. There is, of course, a substantial difference in the densities and velocities of the two flows. Initially, if both flows are stable they can be expected to remain stable throughout any interaction, and flow through a curved channel would be expected to produce the least amount of activity at the interface between the two flows. In some instances, while interaction may be predicted along the interface between the two flows, and while a momentum exchange process may occur, it is expected that irreversible mixing will be slight.

It will therefore be seen that the method and apparatus of the present invention is particularly applicable to small and medium power output gas turbines. Since small power output gas turbine engines cannot employ conventional turbine blade cooling methods such as internally cooled hollow blades, solid blades may be used. The cooling arrangement leads to low nozzle aspect ratio solid turbine blades permitting rugged and yet simple rotor structures. The engines have very high turbine component efficiency and a near 50 percent static reaction degree with highest possible turbine tip speeds, and high specific turbine work output per unit mass of flow medium. The benefit of the internal bypassed air for blade cooling should have at least an equal if not greater effect on propulsive efficiency than the loss of thermodynamic efficiency caused by the bypass air. An internal bypass monorotor can be designed for low axial rotor thrust, thus reducing the demands on a lubrication system and permitting the employment of smaller diameter support bearings. The employment of the present invention may reduce or eliminate the need for strategic materials in the turbine section, as defined in the appended claims.

0206683

CLAIMS

1.      A gas turbine having a compression section
(18), a combustion section (24), and a turbine section
(20), in which, in operation, a portion of cool air is bypassed from
said compression section, characterized by a conduit
(30) for conveying bypassed cool air to the inlet region
of said turbine section for applying cool air to the
suction side of the turbine blades (26) while maintaining Taylor-stable flow conditions of the said cool
air at said turbine and of the hot gases from said
combustion section so as to define a relatively stable
interface therebetween.

2.      A gas turbine as claimed in claim 1 in which
said compression section and turbine section include a
common rotor (112) in a case (132) and characterized by
the fact that said conduit is defined by said rotor
between the compressor vanes (110) and the turbine
(120), and an annular wall (130) on the case (132)
forming a bypass region.

3.      A gas turbine as claimd in claim 1 in which
said compression section is axially separated from said
turbine section, defined by separate rotating components, and characterized by the fact that said conduit
is a passageway (32) extending in a generally axially
direction from an inlet adjacent the tips of the blades
(22) in the compressor section for acceptance of bypass
air to an outlet adjacent the roots of the blades (26)
in said turbine section.

4.      A gas turbine as claimed in claim 1 in which said turbine secton includes a rotor, a plurality of vanes thereon, said vanes being configured with an entry radial section (110) and a discharge axial section (120), and the gases from said combustion section are applied to said axial section, characterized by the fact that said conduit provides cool air to the inlet of said radial section whereby said cool air flows along the suction side of said turbine blades for cooling said blades.

5.      A gas turbine as claimed in any preceding claim in which between five and fifteen percent of total compressor airflow is bypassed through said conduit means.

6.      A a gas turbine as claimed in any preceding claim in which the total pressure of hot gases from the combustion section is considerably greater than the total pressure of the cold air from said conduit so that said cold air forms a flow sheet on the suction side of the turbine blade passages with minimum intermixing with hot gases from the combustion section.

7.      A gas turbine as claimed in claim 4 in which said compressor section and turbine section are mounted on a common monorotor, and characterized by said conduit is defined by a wall (130) at a radially outermost part of the monorotor between said compression section and said turbine section.

8.      A method of operating a gas turbine characterized by steps of bleeding a quantity of cold air from an inlet region and directing said cold air to the radially inner or root ends of the turbine blades while simultaneously applying hot combustion gases to said turbine blades at a radially outer portion thereof, in such a manner so said respective gas flows have minimum intermixing at said turbine blade with the cold air following closely the suction side of the turbine blades.

9.      A method as claimed in claim 8 in which a gas turbine has a bypass passageway, including the steps of intercepting the relatively cooler air from said bypass passage way, providing a conduit for conveying said cooler air to the inlet region of the turbine blades adjacent the radially inner ends thereof, and applying hot gases to the radially outer portions of said turbine blades so that the respective gas flows form a relatively stable interface therebetween.

FIG-1

0206683

FIG-2

0206683

FIG-3

FIG-4

FIG-5

FIG-6

FIG-7

0206683

FIG-8

FIG-9

115
118
130
132
110
116
120
140
112

FIG-10

130
120
132
140
135
110
112